# EUROPEAN PATENT SPECIFICATION

(11) **EP 4 300 241 B1**
(45) Date of publication and mention of the grant of the patent: **16.07.2025**
(21) Application number: 22182254.7
(22) Date of filing: 30.06.2022
(51) Int. Cl.: G05D 1/00

(54) **A METHOD FOR HANDLING HANDOVER OF CONTROL OF TRAILERS IN A WORK SITE**
VERFAHREN ZUM HANDHABEN DES ÜBERGEBENS DER STEUERUNG VON ANHÄNGERN AUF EINER BAUSTELLE
PROCÉDÉ DE GESTION DE TRANSFERT DE COMMANDE DE REMORQUES DANS UN SITE DE TRAVAIL

(43) Date of publication of application: 03.01.2024
(73) Proprietor: VOLVO TRUCK CORPORATION, 405 08 Göteborg (SE)
(72) Inventor: DAS BARMAN, Kuntal, 560064 BANGALORE URBAN (IN); JOSHI, Sachin, 560077 Bangalore (IN); K S, Sudeendra Thirtha Koushik, 560085 Bangalore (IN)
(74) Representative: Valea AB

(56) References cited:
- US-A1- 2008 077 464
- US-A1- 2012 259 482
- US-A1- 2022 185 048

## Description

### TECHNICAL FIELD

The invention relates to a method for handling handover of control of trailers at a work site, in particular wherein the trailers are at least partly autonomous and/or remotely controllable.

The invention can be applied in transporting vehicles, such as trucks, and in loading equipment such as a construction equipment, loading machine/equipment e.g., a wheel loader. Although the invention will be described with respect to transporting vehicles and/or loading equipment interacting with trailers, the invention is not restricted to these particular vehicles.

### BACKGROUND

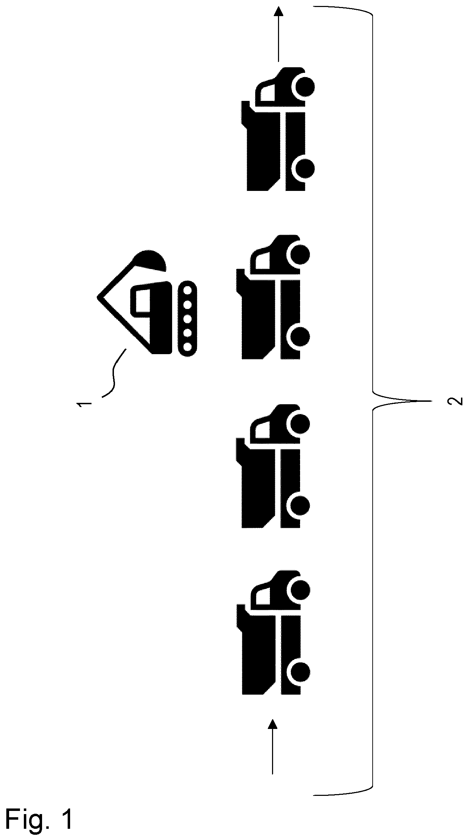

In port areas material handling is taken care of by tractor-trailers and wheel loaders manually guided by ground operators. Materials are often offloaded to a location closer to the ship through cranes. Wheel loaders create smaller heaps before loading the material on a trailer. The operation to create heap and load the material takes around 30 minutes or more per trailer. The tractor on which the trailer is attached remains mostly idle during this operation. The operations by the tractor during this time is to be aligned with the wheel loader and power the trailer for any rare operations may be needed when loading the trailer. This is illustrated in Fig. 1 wherein a loading equipment 1 loads trailers of trucks standing in a loading queue 2, each waiting idle for its turn to be loaded and/or for the loading of the current trailer to be completed. A similar scenario occurs for unloading the trailer, which takes a corresponding long time. Thus for both loading and unloading operations, there is a lot of idle time for all entities. Even when the queue 2 is empty, a driver and a tractor waiting for a loading/unloading operation to complete are mostly spending their time being idle. Hence, there is a need to improve efficiency for loading and/or unloading operations. As examples of the prior art can be cited the following documents: US2022/185048, US2008/077464, US2012/259482.

### SUMMARY

The invention is set forth in the independent claim 1 and in the dependent claims 2 to 15.

An object of the invention is to improve efficiency for loading and/or unloading operations at a work site.

The object is achieved by a method according to claim 1. Hence, there is provided a method for handling at least one trailer at a work site. The at least one trailer is at least partly autonomous and/or remotely controllable. A first trailer is attached to a first transporting vehicle. The method comprises:
- performing a handover of control of the first trailer, which handover triggers an initiation of a first loading and/or unloading operation to be performed by a first loading equipment on the first trailer,
- detecting whether or not a candidate trailer is available to be transported by the first transporting vehicle, and
- when detecting that the candidate trailer is available to be transported by the first transporting vehicle, attaching the candidate trailer to the first transporting vehicle.

Since control of the first trailer is handed over, the first loading and/or unloading operation can be performed without needing the first transporting vehicle to stay present. This allows the first transporting vehicle to be used more efficiently as it does not need to stay present with the first trailer just being idle and thereby improved productivity at the work site. In particular, when detecting that the candidate trailer is available to be transported, attaching the candidate trailer to the first transporting vehicle allows the first transporting vehicle to instead of waiting mostly idle for the first trailer to be loaded/unloaded with the first loading and/or unloading operation, the first transporting vehicle continues to be productive and is enabled perform transporting operations for the candidate trailer. Idle as used herein may mean that the first transporting vehicle is not performing any useful operation which improves productivity such as transporting a trailer.

Optionally, performing the handover of control of the first trailer comprises decoupling the first trailer from the first transporting vehicle, and any one out of:
- transferring remote control of the first trailer to the first loading equipment, or
- transferring autonomous control to the first trailer.

In this way, the first trailer may either be remotely controlled by the first loading equipment or be controlled autonomously. This allows the first trailer to, without support of the first transporting vehicle to perform any suitable assisting operation for the first loading and/or unloading operation which thereby improves productivity at the work site as the first transporting vehicle is enabled to perform other productive actions such as transporting other trailers.

Optionally, performing the handover of control of the first trailer is performed in response to any one or both out of:
- receiving an indication indicating to handover the control of the first trailer, and
- determining that the first loading equipment is available to perform the first loading and/or unloading operation on the first trailer.

In this way it is possible to know when to most efficiently handover the control of the first trailer and thereby improve productivity in the work site.

Optionally, attaching the candidate trailer to the first transporting vehicle comprises any one or more out of:
- obtaining remote control of the candidate trailer,
- coupling the candidate trailer and the first transporting vehicle using a fifth wheel coupling,
- performing a handover of control of the candidate trailer to the first transporting vehicle from any one out of: the first loading equipment, a second loading equipment, and the candidate trailer, and
- triggering an operation to be performed by the candidate trailer and/or the first transporting vehicle for assisting in attaching the candidate trailer to the first transporting vehicle.

Attaching the candidate trailer thus allows the transporting vehicle to transport the first trailer to a location for continuing its operation and thereby improve productivity at the work site. For example the first trailer may be transported to another location where it may be made available for a further loading and/or unloading operation.

Optionally, detecting whether or not the candidate trailer is available to be transported by the first transporting vehicle, comprises receiving an indication, the indication indicating any one or more out of:
the candidate trailer is available to be transported,
the candidate trailer is empty and/or idle, and
the candidate trailer is loaded, and
the candidate trailer is ready for at least one loading and/or unloading operation.

The indication may thus allow to more efficiently detect that the candidate trailer is available, and thus the transporting vehicle can attach to the candidate trailer and transport the candidate trailer to a suitable location and thereby improve productivity in the work site.

According to a second aspect, there is provided a method for handling at least one trailer in a work site. The at least one trailer is at least partly autonomous and/or remotely controllable. The method comprises:
- detecting an initiation of a first loading and/or unloading operation on a first trailer to be performed by a first loading equipment,
- triggering the first loading equipment to perform the first loading and/or unloading operation on the first trailer,
- in response to determining that the first loading and/or unloading operation is complete, triggering a handover of control of the first trailer.

As the first loading equipment is triggered to perform the first loading and/or unloading operation of the first trailer when detecting the initiation of the first loading and/or unloading operation, the first trailer is enables to be dynamically loaded when needed which thereby improves productivity. Furthermore, as the handover of the control of the first trailer is performed when finishing the first loading and/or unloading operation, the first trailer can be moved away from the first loading equipment and thereby enable the first loading equipment to be available to perform further loading and/or unloading operations to other trailers. In this way the first loading equipment improves productivity of the work site by either performing or being ready to for performing loading and/or unloading operations.

Optionally, triggering the handover of the control of the first trailer comprises triggering any one out of:
- a transfer of remote control of the first trailer to a candidate transporting vehicle, or to a candidate loading equipment, or
- a transfer of autonomous control to the first trailer.

In this way, the first trailer may either be remotely controlled by the candidate transporting vehicle or be controlled autonomously. This allows the first trailer to, without support of the first loading equipment to perform any operation for handling the complete loading and/or unloading operation such as attaching to the candidate transporting vehicle.

Optionally, the method further comprises triggering an operation to be performed by the first trailer for assisting the first loading equipment in performing the first loading and/or unloading operation.

In this way, the first loading and/or unloading operation can be performed more efficiently without the use of a transporting vehicle to assist in performing the first loading and/or unloading operation.

Optionally, the method further comprises assessing whether or not a second loading and/or unloading operation can be performed on the first trailer. In these embodiments the method comprises triggering the handover of the control of the first trailer based on the assessment.

In this way, productivity at the work site is increased as the second loading and/or unloading operation will be performed when assessed possible. This further allows the intermediate handling of the first trailer without the use of a transporting vehicle which thereby allows more efficient use of transporting vehicles.

According to a third aspect, there is provided a first control unit configured to perform the method according to the first aspect. The first control unit may be an electronic control unit. Advantages and effects of the first control unit are largely analogous to the advantages and effects of the method according to the first aspect. Further, all embodiments of the control unit are applicable to and combinable with all embodiments of the method according to the first aspect, and vice versa.

According to a fourth aspect, there is provided a second control unit configured to perform the method according to the second aspect. The second control unit may be an electronic control unit. Advantages and effects of the second control unit are largely analogous to the advantages and effects of the method according to the second aspect. Further, all embodiments of the control unit are applicable to and combinable with all embodiments of the method according to the second aspect, and vice versa.

According to a fifth aspect, there is provided a transporting vehicle comprising the first control unit according to the third aspect. Advantages and effects of the transporting vehicle are largely analogous to the advantages and effects of the method according to the first aspect and/or the first control unit. Further, all embodiments of the vehicle are applicable to and combinable with all embodiments of the method according to the first aspect, and vice versa.

According to a sixth aspect, there is provided a loading equipment comprising the second control unit according to the fourth aspect. Advantages and effects of the loading equipment are largely analogous to the advantages and effects of the method according to the second aspect and/or the second control unit. Further, all embodiments of the vehicle are applicable to and combinable with all embodiments of the method according to the second aspect, and vice versa.

According to a seventh aspect, there is provided a computer program comprising program code means for performing the steps of the method(s) according to the first and/or second aspect, when said program is run on a computer. Advantages and effects of the computer program are largely analogous to the advantages and effects of the corresponding method(s). Further, all embodiments of the computer program medium are applicable to and combinable with all embodiments of the corresponding method(s), and vice versa.

According to an eight aspect, there is provided a computer program medium carrying a computer program comprising program code means for performing the steps of the method(s) according to the first and/or second aspect, when said program is run on a computer. Advantages and effects of the computer program medium are largely analogous to the advantages and effects of the corresponding method(s). Further, all embodiments of the computer program medium are applicable to and combinable with all embodiments of the corresponding method(s), and vice versa.

Further advantages and advantageous features of the invention are disclosed in the following description and in the dependent claims.

### BRIEF DESCRIPTION OF THE DRAWINGS

With reference to the appended drawings, below follows a more detailed description of embodiments of the invention cited as examples.

In the drawings:
- Fig. 1: is a schematic illustration of prior art
- Fig. 2: is a schematic overview of a work site.
- Fig. 3: is a flowchart illustrating a method.
- Fig. 4: is a flowchart illustrating a method.
- Figs. 5a-5b: are illustrations of example scenarios of handing over control of a trailer.
- Figs. 6a-6b: are schematic block diagrams illustrating a first control unit.
- Figs. 7a-7b: are schematic block diagrams illustrating a second control unit.

### DETAILED DESCRIPTION OF EXAMPLE EMBODIMENTS OF THE INVENTION

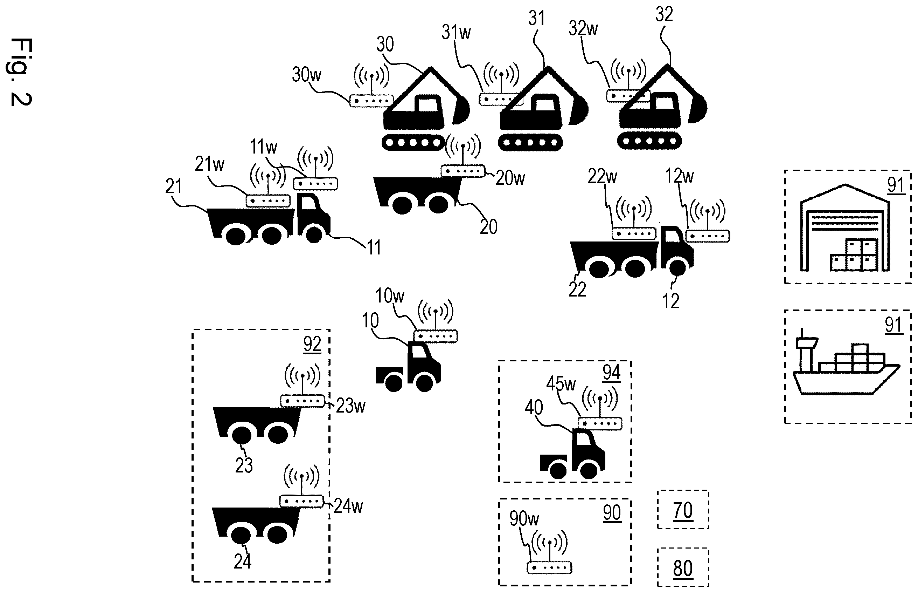

**Fig. 2** illustrates a **work site 1.** The work site 1 comprises at least one **transporting vehicle 10, 11, 12.** The at least one transporting vehicle comprises a **first transporting vehicle 10** and any one or both of a **second transporting vehicle 11** and a **third transporting vehicle 12.** Fig. 2 illustrates three transporting vehicles, however, the work site 1 may comprise any suitable number of transporting vehicles. Each of the at least one transporting vehicle 10, 11, 12 may be any suitable vehicle capable of transporting a respective trailer, e.g., by using a fifth wheel coupling providing a respective link between the respective trailer and the at least one transporting vehicle 10, 11, 12. Transporting a trailer as used herein may mean towing the trailer. For example, each of the at least one transporting vehicle 10, 11, 12 may respectively be a tractor, truck, etc.

Each of the at least one transporting vehicle 10, 11, 12 may respectively be at least partly autonomous and/or may be arranged to comprise a user such as a driver. Each of the at least one transporting vehicle 10, 11, 12 may comprise a cabin for the respective users. The cabin may comprise a swivel seat used for turning around the user, e.g., when needing to couple the respective transporting vehicle with a trailer using a fifth wheel coupling. Each of the at least one transporting vehicle 10, 11, 12 may respectively comprise a **wireless device 10w, 11w, 12w** used for transmitting and/or receiving wireless signals. e.g., for sending control commands to trailers and/or negotiating handover of control of trailers.

The work site 1 comprises at least one **trailer 20, 21, 22, 23, 24.** The at least one trailer comprises a **first trailer 20** and any one or more of a **second trailer 21,** a **third trailer 22,** a **fourth trailer 23,** and a **fifth trailer 24.** Fig. 2 illustrates five trailers, however, the work site 1 may comprise any suitable number of trailers. Each of the at least one trailer 20, 21, 22, 23, 24 may respectively comprise a **wireless device 20w, 21w, 22w, 23w, 24w** used for transmitting and/or receiving wireless signals, e.g., for receiving control commands from another entity, e.g., the first transporting vehicle 10. Each of the at least one trailer 20, 21, 22, 23, 24 may respectively be at least partly autonomous and/or remote controllable. At least partly autonomous as used herein may mean that the respective trailer has autonomous capabilities e.g., the respective trailer may be capable of operating such as driving to a location and/or adjusting its position without being controlled by a user and/or other controlling entity. Each of the at least one trailer 20, 21, 22, 23, 24 may be arranged to first be towed by a respective transporting vehicle, and when suitable, detached and triggered autonomously and/or by remote control of the respective transporting vehicle, to assist in performing operations which will be explained by embodiments herein. Each of the at least one trailer 20, 21, 22, 23, 24 may respectively be an electric trailer, e.g., a Battery Electric Vehicle (BEV). In these embodiments, each of the at least one trailer 20, 21, 22, 23, 24 may respectively comprise a battery charged by a respective transporting vehicle which is coupled with the respective trailer, e.g., when transporting the respective trailer.

The work site 1 comprises **at least one loading equipment 30, 31,** the at least one loading equipment 30, 31, comprises a **first loading equipment 30** and may comprise a **second loading equipment 31** and/or a **third loading equipment 32.** Each of the at least one loading equipment may respectively be a wheel loader or any other suitable vehicle for performing loading and/or unloading operations on the at least one trailer 20, 21, 22, 23, 24. Fig. 2 illustrates two loading equipment, however the work site 1 may comprise any suitable number of work equipment. Each of the at least one loading equipment 30, 31, 32 may respectively comprise a **wireless device 30w, 31w, 32w** used for transmitting and/or receiving wireless signals, e.g., for sending control commands to the at least one trailer 20, 21, 22, 23, 24 and/or negotiating handover of control of the at least one trailer 20, 21, 22, 23, 24 with other wireless devices.

In embodiments herein, each of the at least one transporting vehicle 10, 11, 12 may respectively be configured to transport a respective trailer out of the at least one trailer 20, 21, 22, 23, 24. When deemed that a first loading and/or unloading operation shall be performed on a respective trailer, the respective at least one transporting vehicle 10, 11, 12 hands over control of the respective trailer using its respective wireless device, e.g., to be autonomously controlled and/or remotely controlled by a respective loading equipment out of the at least one loading equipment 30, 31, 32. Each of the at least one loading equipment 30, 31, 32 may respectively be configured to perform loading and/or unloading operation to the respective trailer. When the trailer is fully loaded, a transporting vehicle out of the at least one transporting vehicle 10, 11, 12 may be arranged to couple the respective trailer and transport the respective trailer to **an end location 91,** e.g. a ship or warehouse for unloading and exporting/storing the goods loaded on the respective trailer.

The work site 1 may comprise a **temporary parking location 92** where one or more trailers out of the at least one trailer 20, 21, 22, 23, 24 may be parked when not being used, e.g., when idle. When the at least one transporting vehicle 10, 11, 12 has handed over control of a respective trailer, the at least one transporting vehicle 10, 11, 12 may be arranged to drive to the temporary parking location 92 and attach a new trailer.

The work site 1 may comprise **at least one rescue vehicle 40,** e.g., a low-profile pushback tractor. The at least one rescue vehicle 40 may comprise a **wireless device 40w** used for transmitting and/or receiving wireless signals, e.g., for sending control commands to the at least one trailer 20, 21, 22, 23, 24 and/or negotiating handover of control of the at least one trailer 20, 21, 22, 23, 24 with other wireless devices. The at least one rescue vehicle 40 may, when detected that a vehicle in the work site 1 is stuck and/or damaged in the work site 1, tow the vehicle to suitable location. The at least one rescue vehicle 40 may further move obstacles in the way for vehicles in the work site 1.

The work site 1 may comprise **a control center 90.** Alternatively, the control center 90 may be remote from the work site 1. The control center 90 may comprise a **wireless device 90w.** The control center 90 may be arranged to coordinate at least one virtual queue structure of how trailers out of the at least one trailer 20, 21, 22, 23, 24 shall be transported by the at least one transporting vehicle 10, 11, 12 and handed over to be loaded/unloaded by the at least one loading equipment 30, 31, 32. The control center 90 may keep track of available trailers out of the at least one trailer 20, 21, 22, 23, 24 to be transported by available transporting vehicles out of at least one transporting vehicle 10, 11, 12. To keep track of the at least one virtual queue structure, the control center 90 may communicate queuing and/or dequeuing operations with the wireless devices in the work site 1, e.g., in response and/or in prior to perform any control operations with regards to the at least one trailer 20, 21, 22, 23, 24, e.g., handing over control, attaching, etc.

Embodiments herein may be performed at least partially by a **first control unit 70** and/or **a second control unit.** The first control unit 70 and/or the second control unit 80 may be comprised in any suitable location, e.g. in the control center 90 or in any suitable remote location. The first control unit 70 may also be comprised in the first transporting vehicle 10, 11, 12, e.g., in the first transporting vehicle. The second control unit 80 may also be comprised in the at least one loading equipment 30, 31, 32, e.g., in the first loading equipment 30.

In the example scenario of Fig. 2, the first transporting vehicle 10 has handed over control of the first trailer 20 such that the first trailer 20 is remotely controlled by the first loading equipment 30 such that the first trailer 20 can be loaded and/or unloaded. The first transporting vehicle 30 is thus enabled to perform other operations, e.g., transport other trailers, instead of waiting idle with the first trailer 20.

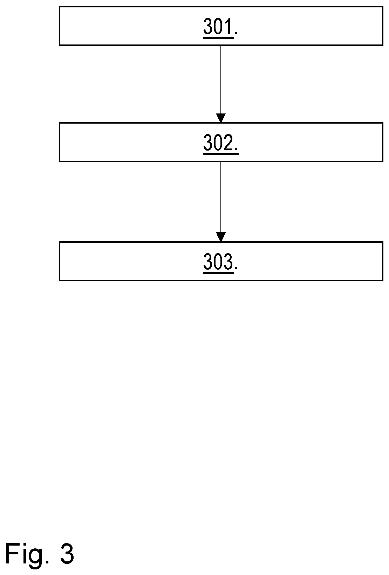

**Fig. 3** illustrates a method for handling the at least one trailer 20, 21, 22, 23, 24 in the work site 100. The at least one trailer 20, 21, 22, 23, 24 is at least partly autonomous and/or remotely controllable. The first trailer 20 is attached to the first transporting vehicle 10. The actions may be taken in any suitable order and may be combined with any other embodiments and/or examples herein. The method may be performed by the first control unit 70, e.g. as part of the first transporting vehicle 10 or as part of the control center 90.

### Action 301

The method comprises performing a handover of control of the first trailer 20 from the first transporting vehicle 10, e.g., to the first trailer 20 or to the first loading equipment 30. In this way, the first transporting vehicle 10 is no longer responsible for the first trailer 20 and can thereby be productive in performing other operations, e.g., transporting other trailers and thereby increasing a number of transported trailers over a time period.

In some embodiments, performing the handover of control of the first trailer 20 comprises transferring remote control of the first trailer 20 to the first loading equipment 30, or transferring autonomous control to the first trailer 20.

Transferring the remote control of the first trailer 20 to the first loading equipment 30 may comprise using the wireless device 10w to send and/or receive a first signal to the wireless device 30w of the first loading equipment 30 to indicate that the first trailer 20 is to be handed over. A negotiation process such as a handshake may first be performed with the wireless device 30w of the first loading equipment 30.

Similarly, transferring autonomous control to the first trailer 20 may comprise using the wireless device 10w to send and/or receive a second signal to the wireless device 20w of the first trailer 20 to indicate that the first trailer 20 is now under autonomous control. In other words, transferring autonomous control to the first trailer 20 may comprise handing over control of the first trailer 20 from the first transporting vehicle 10 to the first trailer 20.

In other words, performing the handover of the control of the first trailer 20 may comprise requesting the handover of control or receiving a request to handover the control, e.g., from the first loading equipment and/or the control center 90.

In some embodiments, performing the handover of control of the first trailer 20 comprises decoupling the first trailer 20 from the first transporting vehicle 10. In other words, the first trailer 20 may initially be coupled with the first transporting vehicle 10, e.g., using a fifth wheel coupling which needs to be uncoupled / released. When decoupling the first trailer 20, the first trailer 20 may be configured to be operated by a battery comprised in the first trailer.

The handover of control of the first trailer triggers an initiation of a first loading and/or unloading operation to be performed by the first loading equipment 30 on the first trailer 20. For example, when transferring the remote control of the first trailer 20 to the first loading equipment 30, the first signal may indicate that the first loading equipment shall remotely control the first trailer 20 such that the first loading equipment 30 may perform the first loading and/or unloading operation on the first trailer 20. This may comprise remotely operating the first trailer 20 to drive to a suitable location and/or to dynamically adjust its position when needed during the first loading and/or unloading operation.

As another example when transferring autonomous control to the first trailer 20, the second signal may indicate that the first trailer 20 shall autonomously operate such that the first loading equipment 30 may perform the first loading and/or unloading operation on the first trailer 20. This may comprise operating the first trailer 20 to drive to a suitable location and/or to dynamically adjust its position when needed during the first loading and/or unloading operation.

In some embodiments, performing the handover of control of the first trailer 20 is performed in response to receiving an indication indicating to handover the control of the first trailer 20. This may be when the control center 90 and/or the first loading equipment 30 indicates that the first loading equipment is available for the first loading and/or unloading operation. Additionally or alternatively, performing the handover of control of the first trailer 20 is performed in response to determining that the first loading equipment 30 is available to perform the first loading and/or unloading operation on the first trailer 20. For example, this may be performed by using cameras, sensors, and/or wireless communication with the first loading equipment 30, to detect that the first loading equipment 30 is idle and/or is available perform the first loading and/or unloading operation.

### Action 302

The method comprises detecting whether or not a candidate trailer 20, 21, 22, 23, 24 is available to be transported by the first transporting vehicle 10. This may further mean that it is detected whether the first transporting vehicle 10 can perform more productive work in the work site 1, e.g., by transporting the candidate trailer 20, 21, 22, 23, 24 and thereby transporting an increased number of trailers over a time period. In some embodiments, detecting whether or not the candidate trailer 20, 21, 22, 23, 24 is available to be transported by the first transporting vehicle 10, comprises receiving an indication. There may be one or more candidate trailers 20, 21, 22, 23, 24 that are detected to be available.

The indication may indicate any one or more out of:
the candidate trailer 20, 21, 22, 23, 24 is available to be transported,
the candidate trailer 20, 21, 22, 23, 24 is empty and/or idle, e.g., it is possible to pick up an idle trailer which may need any of transporting, loading and/or unloading etc.,
the candidate trailer 20, 21, 22, 23, 24 is loaded, e.g., which may be indicated by the at least one loading equipment 30, 31, 32 and/or the candidate trailer 20, 21, 22, 23, 24 itself when detecting that the candidate trailer 20, 21, 22, 23, 24 is loaded, e.g., fully loaded or loaded over a threshold, and
the candidate trailer 20, 21, 22, 23, 24 is ready for at least one loading and/or unloading operation.

The indication may be received from any suitable wireless device associated with any one or more out of the control center 90, the candidate trailer 20, 21, 22, any of the at least one transporting vehicle 31, 32, and any of the at least one loading equipment 30, 31, 32. As an example, the indication may be sent from a wireless device 30w, 31w, of the at least one loading equipment 30, 31, 32 when a respective loading operation has been completed and the candidate trailer 20, 21, 22, e.g., the second trailer 21, is ready to be transported to the end location 91.

When multiple candidate trailers are available amongst the candidate trailers 20, 21, 22, 23, 24 a trailer is selected by means of randomness, pseudo-randomness, priority or selected by a queuing or dequeuing operation of the at least one virtual queue handled by the control center 90.

### Action 303

When detecting that the candidate trailer 20, 21, 22, 23, 24 is available to be transported by the first transporting vehicle 10, the method comprises attaching the candidate trailer 20, 21, 22, 23, 24 to the first transporting vehicle 10. Attaching as used herein may mean attaining a physical coupling between the first transporting vehicle 10 and the candidate trailer 20, 21, 22, 23, 24 and/or may mean obtaining a remote control of the candidate trailer 20, 21, 22. As the candidate trailer 20, 21, 22, 23, 24 is attached to the first transporting vehicle 10, the first transporting vehicle 10 may transport the candidate trailer 20, 21, 22, 23, 24 and the first transporting vehicle 10 may therefore be more productive than if staying idle coupled with the first trailer 20. This is since the first transporting vehicle 10 may first transport the first trailer 20, handover control of the first trailer 20, attach to the candidate trailer 20, 21, 22, 23, 24 different from the first trailer 20, and transport the candidate trailer 20, 21, 22, 23, 24, all while the first trailer 20 is still being loaded and/or unloaded. The first transporting vehicle 10 may at a later time attach to the first trailer 20 when the first loading and/or unloading operation is complete, and may at that later time have transported multiple candidate trailers 20, 21, 22, 23, 24, and thus have increased a number of trailer transportations made by the first transporting vehicle 10 during a time period.

Attaching the candidate trailer 20, 21, 22, 23, 24 to the first transporting vehicle 10 may comprise coupling the candidate trailer 20, 21, 22, 23, 24 to the first transporting vehicle 10. However, this may not always be a simple process to do automatically and some assistance from the candidate trailer 20, 21, 22, 23, 24 may be necessary, e.g., driving to the first transporting vehicle 10 and/or carefully positioning for a coupling operation. Hence attaching the candidate trailer 20, 21, 22, 23, 24 to the first transporting vehicle 10 may comprise sending an instruction to initiate attaching the candidate trailer 20, 21, 22, 23, 24 to the first transporting vehicle 10, the instruction may be sent to any one or both of the candidate trailer 20, 21, 22, 23, 24 and the first transporting vehicle 10. When the candidate trailer 20, 21, 22, 23, 24 is remotely controlled by any other entity, e.g. the at least one loading equipment 30, 31, 32 or other transporting vehicle such as the second transporting vehicle 11, the instruction may be sent to the controlling entity and/or as a broadcast, e.g., which may trigger a handover of control of the candidate trailer to the first transporting vehicle 10.

In some embodiments, attaching the candidate trailer 20, 21, 22, 23, 24 to the first transporting vehicle 10 comprises any one or more out of:
- obtaining remote control of the candidate trailer 20, 21, 22, e.g., by a handover from the at least one loading equipment 40, 41 and/or by obtaining remote control of an idle trailer,
- coupling the candidate trailer 20, 21, 22, 23, 24 and the first transporting vehicle 10 using a fifth wheel coupling, e.g., by triggering coupling operations for both the candidate trailer 20, 21, 22, 23, 24 and the first transporting vehicle 10,
- performing a handover of control of the candidate trailer 20, 21, 22, 23, 24 to the first transporting vehicle 10 from any one out of: the first loading equipment 30, a second loading equipment 31, and the candidate trailer 20, 21, 22, and
- triggering an operation to be performed by the candidate trailer 20, 21, 22, 23, 24 and/or the first transporting vehicle 10 for assisting in attaching the candidate trailer 20, 21, 22, 23, 24 to the first transporting vehicle 10.

As an example, the first transporting vehicle 10 may swivel a seat of the first transporting vehicle 10 such that a user of the transporting vehicle 10 may carefully observe while remotely controlling the candidate trailer 20, 21, 22, 23, 24 and/or controlling the first transporting vehicle 10 for coupling the candidate trailer 20, 21, 22, 23, 24 to the first transporting vehicle 10, e.g., using a fifth wheel coupling.

In some embodiments, no physical coupling is necessary to be attained. This is since the candidate trailer 20, 21, 22, 23, 24 may be able to be remotely controlled to the end location and/or handed over to another entity, e.g., another transporting vehicle before necessary to couple with the candidate trailer 20, 21, 22, 23, 24.

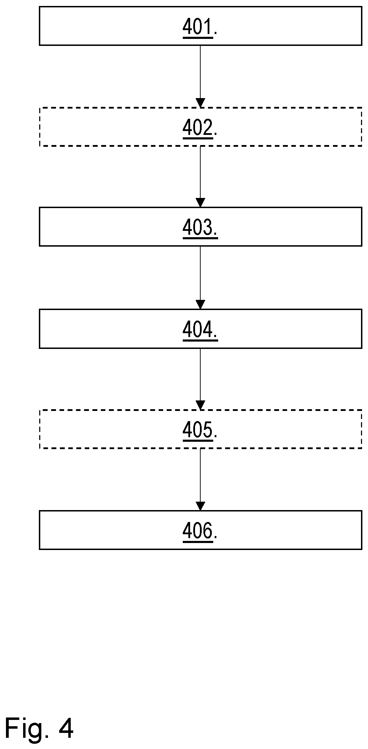

**Fig. 4** illustrates a method for handling the one or more trailers 20, 21, 22, 23, 24 at the work site 100. The at least one trailer 20, 21, 22, 23, 24 is at least partly autonomous and/or remotely controllable. At least one of the following actions 401-406 may be taken in any suitable order and may be combined with any other embodiments and/or examples herein. Dashed boxes in Fig. 4 may indicate optional actions. The method may be performed by the second control unit 80, e.g. as part of the first loading equipment 30 or as part of the control center 90.

### Action 401

The method comprises detecting an initiation of a first loading and/or unloading operation on a first trailer 20 to be performed by a first loading equipment 30.The detection of the initiation of the first loading and/or unloading operation of the first trailer 20 may for example be detected when remote control of the first trailer 20 is handed over from the first transporting vehicle 10 to the first loading equipment 30, e.g., as in action 301. The detection of the initiation of the first loading and/or unloading operation of the first trailer 20 may also be detected when the first trailer 20 obtains autonomous control, e.g., by indication from a third signal sent from the wireless device 20w of the first trailer 20 and/or from a fourth signal sent from the wireless device 10w of the first transporting vehicle 10, and/or from a control signal received from the control center 90 by the wireless device 90w.

### Action 402

In some embodiments, the method comprises triggering an operation to be performed by the first trailer 20 for assisting the first loading equipment 30 in performing the first loading and/or unloading operation. The operation to be performed may be indicated by a received signal, e.g., the third and/or fourth signal above, and/or by a control signal received from the control center 90 by the wireless device 90w. The operation to be performed may for example comprise any one or more out of:
an operation to dynamically position the first trailer 20 during the first loading and/or unloading operation, and
an operation to drive to a suitable location for the first loading and/or unloading operation, i.e. next to the first loading equipment 30.

### Action 403

The method comprises triggering the first loading equipment 30 to perform the first loading and/or unloading operation on the first trailer 20.

The operation to be performed may be indicated by a received signal, e.g., the third and/or fourth signal above, and/or by a control signal received from the control center 90 by the wireless device 90w. Triggering the first loading equipment 30 to perform the first loading and/or unloading operation, may comprise determining that the first trailer 20 is suitably positioned for the first loading and/or unloading operation, e.g., the first trailer 20 is positioned within a maximum operating distance of the first loading equipment 30.

### Action 404

The method comprises determining that the first loading and/or unloading operation is complete. Determining that the first loading and/or unloading operation is complete may for example comprise the first loading equipment 30 and/or the first trailer 20 using respective sensors to determine that the first trailer 20 is fully loaded, empty, and/or that there are no more goods to load. The first loading equipment 30 and/or the first trailer 20 may signal their respective determination using a corresponding wireless device 20w, 30w, e.g., to the second control unit 80 and/or to the control center 90.

### Action 405

In some embodiments, the method comprises assessing whether or not a second loading and/or unloading operation can be performed on the first trailer 20. Action 404 may be performed together with or alternatively to action 404. Assessing whether or not the second loading and/or unloading operation can be performed on the first trailer 20 may for example comprise the first loading equipment 30 and/or the first trailer 20 using respective sensors to assess whether the first trailer 20 is fully loaded, empty, there is space available, and/or there are goods to unload. The first loading equipment 30 and/or the first trailer 20 may signal their respective assessments using a corresponding wireless device 20w, 30w, e.g., to the second control unit 80 and/or to the control center 90.

### Action 406

In response to determining that the first loading and/or unloading operation is complete, e.g. as in action 404 above, the method comprises triggering a handover of control of the first trailer 20.

In some embodiments, triggering the handover of the control of the first trailer 20 comprises triggering any one out of:
- a transfer of remote control of the first trailer 20 to a candidate transporting vehicle 10, 11, 12, or to a candidate loading equipment 31, 32, or
- a transfer of autonomous control to the first trailer 20.

In this way, the first trailer 20 may be transported away such that the first loading equipment is available to perform further loading and/or unloading operations for more trailers out of the at least one trailer 20, 21, 22, 23, 24.

In some embodiments, triggering the handover of the control of the first trailer 20 is based on the assessment in action 205. For example, when assessed that the second loading and/or unloading operation can be performed on the first trailer 20, triggering the handover of the control of the first trailer 20 may comprise transferring the remote control to the candidate loading equipment 31, 32 for performing the second loading and/or unloading operation, e.g., by sending a suitable signal to the wireless device 31w, 32w of the respective candidate loading equipment 31, 32. Alternatively, triggering the handover of the control of the first trailer 20 may comprise transferring the autonomous control to the first trailer 20 such that the first trailer 20 is also triggered to assist the candidate loading equipment to perform the second loading and/or unloading operation on the second trailer 20, e.g., by triggering the second trailer 20 to position itself properly in relation to the candidate loading equipment 31, 32.

When multiple candidate transporting vehicles and/or multiple loading equipment are respectively available in or in association with the candidate transporting vehicle 10, 11, 12 and/or in the candidate loading equipment 31, 32, a candidate loading equipment and/or transporting vehicle is selected by means of randomness, priority or selected by a queuing or dequeuing operation of the at least one virtual queue handled by the control center 90.

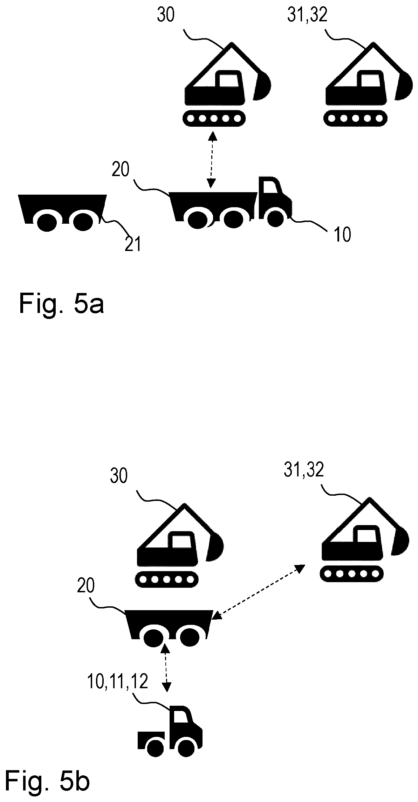

**Figs. 5a****-b** illustrates example scenarios of handing over control of the first trailer 20. In **Fig. 5a****,** the first transporting vehicle 10 is transporting the first trailer 20. The first transporting vehicle 10 hands over control of the first trailer 20 to the first loading equipment 30 for performing the first loading and/or unloading operation on the first trailer 20, e.g. as in action 301. By remote control of the first loading equipment 30, the first trailer 20 is driven to the first loading equipment 30 and positioned in a suitable location for the first loading and/or unloading operation. This allows the first transporting vehicle 10 to be free to drive to the second trailer 21 and couple the second trailer 21 to the first transporting vehicle 10, e.g., by use of a fifth wheel coupling, e.g., as in action 303. The first transporting vehicle 10 may then proceed to transport the second trailer 21 to the second loading equipment 31, and hand over the control of the second trailer 21 to the second loading equipment 31 for loading and/or unloading operation on the second trailer 21. The first transporting vehicle 10 may proceed in a similar manner and be productive in transporting trailers while trailers are idle being loaded and/or unloaded by the respective loading equipment.

In **Fig. 5a****,** the first trailer 20 is being loaded by the first loading equipment 30 using a first loading operation, e.g. as triggered in action 403. When determined that the first loading operation is complete, e.g. as in action 404, it is assessed whether the first trailer 20 is fully loaded or not, e.g. as in action 405. When the first trailer 20 is fully loaded, e.g., loaded above a threshold, the loading equipment 30 will hand over the control of the first trailer 20 to a candidate transporting vehicle 10, 11, 12, e.g., the second transporting vehicle 11, to be transported away to the end location 91. When the first trailer 20 is not fully loaded, the loading equipment 30 will hand over the control of the first trailer 20 to a candidate loading equipment 31, 32, e.g., the second loading equipment 31, such that the second loading equipment can fill up the first trailer 20 before being transported away to the end location 91. In both scenarios, the first loading equipment is freed up to ensure that it is available to perform further loading and/or unloading operations for other trailers.

### Further embodiments and variations

In some embodiments herein, the wireless devices communicate at least partly using a short range, low power, and high bandwidth communication mechanism, e.g., using Ultra-wideband (UWB). Communication may be used to indicate operations, handing over control of trailers, e.g., as in action 301, 303, 404, but may further be used to share data about location, surrounding environment of the work site 1 etc.

Trailers out of the at least one trailer 20, 21, 22, 23, 24, may be battery-driven between the time when they are decoupled from a respective transporting vehicle, until coupled back to a transporting vehicle. The respective batteries are charged while coupled to a respective transporting vehicle. Capacity of the respective batteries may be arranged to enable at least a short distance movement of the respective trailer to perform at least one loading and/or unloading operation and to drive to and couple to a transporting vehicle. The respective battery capacity may also allow for conducting few operations such as adjust positions while loading, tipping, wireless communication, etc.

Embodiments herein may be performed in a cloud environment, e.g. the control center 90 may be part of a cloud environment in a remote server. Accordingly, sensors and wireless devices in the at least one transporting vehicle 10, 11, 12, the at least one trailer 20, 21, 22, 23, 24, and/or the at least one loading equipment 30, 31, 32, may be operated remotely from a cloud environment.

The control center 90 may coordinate a queuing mechanism for selecting candidate trailers 20, 21, 22, 23, 24, loading equipment 30, 31, 32 and/or transporting vehicles 10, 11, 12. The control center 90 may comprise and/or have access to a local area map, e.g., based on sensor readings of the at least one trailer 20, 21, 22, 23, 24, the at least one transporting vehicle 10, 11, 12, and/or the at least one loading equipment 30, 31, 32. The local area map may be obtainable by any device to position itself in the work site 1. The control center 90 may further be able to provide, to any suitable device, location and other suitable data regarding transporting vehicles, trailers and/or loading equipment in the work site 1, e.g., occupancy, availability, power capacity, failures etc.

Control mechanism of trailers out of the at least one trailer 20, 21, 22, 23, 24, e.g., when remotely controlled, may comprise short distance movement and/or tipping operations. Control sharing mechanism between the at least one transporting vehicle 10, 11, 12, and the at least one loading equipment 30, 31, 32 is referred to as hand over of control of the respective trailer.

The control center 90 may provide fleet management, trailer queueing, path planning, complete resource planning, scheduling and route planning mechanisms. The actions herein may be in response to any of the operations by the control center 90, e.g., communicated by the wireless device 90w to any of the work site 100.

For example, in embodiments herein, any trailer out of the at least one trailer 20, 21, 22, 23, 24 may have autonomous capabilities. When one of the at least one loading equipment 30, 31, 32 relinquishes control of a loaded respective trailer, e.g., as in action 406, the control may not always be handed over to the at least one transporting vehicle 10, 11, 12. Instead, control may at least temporarily be handed over to the respective trailer 20, 21, 22, 23, 24 which may then, e.g., by communicating with the control center 90 using the wireless device 90w, join a queue of completed trailers to be picked up by the at least one transporting vehicle 10, 11, 12. The control center 90 may then coordinate instructions to the respective trailer and/or the at least one transporting vehicle 10, 11, 12 of how to operate until they are attached, e.g., as in action 303.

A similar scenario may comprise that the at least one transporting vehicle 10, 11, 12, hands over control to a respective trailer 20, 21, 22, 23, 24, e.g., by communicating with the control center 90 using the wireless device 90w, join a queue of empty trailers waiting to be loaded e.g., by the at least one loading equipment 30, 31, 32. The control center 90 may then coordinate instructions to the respective trailer 20, 21, 22, 23, 24 and/or the at least one loading equipment 30, 31, 32 of how to operate until the respective trailer is in place for a loading operation, e.g., as in action 402.

In some of these embodiments, the at least one trailer 20, 21, 22, 23, 24 may communicate vital parameters to the control center 90. The control center 90 may coordinate the vehicle and/or equipment in the work site 100 based on the received trailer parameters. The vital parameters may include any or more of a current load, battery capacity left, estimated time to charge when attached to a transporting vehicle, estimated battery time left.

Embodiments herein, e.g. any of above-mention actions may, when detecting that there may be a problem with a trailer out of the at least one trailer 20, 21, 22, 23, 24, may trigger the at least one rescue vehicle 40 to drive and transport the respective trailer out of the at least one trailer 20, 21, 22, 23 , 24. The problem may comprise e.g., no response, difficulty remote controlling the respective trailer, indication of damage and/or poor battery signaled by the respective trailer etc.

Embodiments herein may comprise a simple and efficient coupling and decoupling of trailers out of the at least one trailer 20, 21, 22, 23, 24. This is provided by both being able to remote control the respective trailer and that the at least one loading equipment 30, 31, 32 respectively comprises a swivel seat such that a user can be turned around to observe the coupling of the respective trailer. This allows quicker and more efficient coupling operations.

The first control unit 70 may be configured to handle the at least one trailer 20, 21, 22, 23, 24 in the work site 100. The at least one trailer 20, 21, 22, 23, 24 is at least partly autonomous and/or remotely controllable. The first trailer 20 is attached to a first transporting vehicle 10.

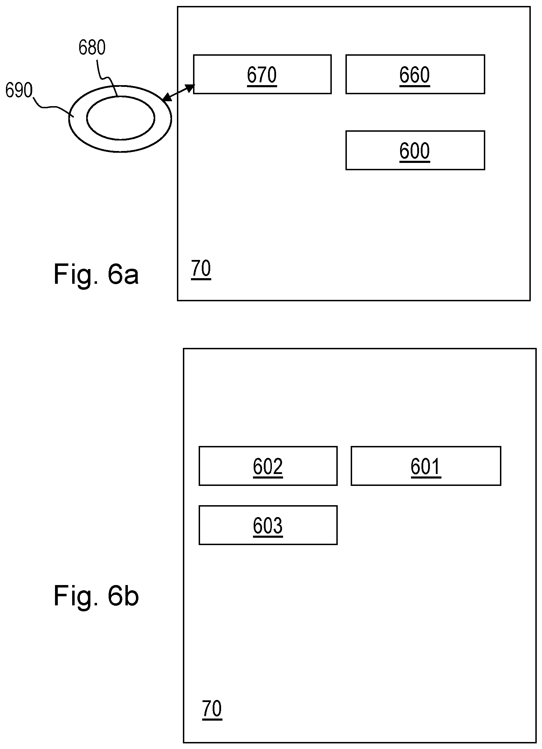

The first control unit 70 may further be configured to perform any one or more of the above actions 301-303 and/or any other suitable example or embodiment herein. The first control unit 70 may for example comprise an arrangement depicted in Figs. 6a and 6b.

The first control unit 70 may comprise an input and output interface 600 configured to communicate with any necessary components and/or entities of embodiments herein, e.g., the exemplified wireless devices in Fig. 2. The input and output interface 600 may comprise a wireless and/or wired receiver (not shown) and a wireless and/or wired transmitter (not shown). The first control unit 70 may be arranged in any suitable location such as e.g., comprised in the at least one transporting vehicle 10, 11, 12, e.g., one first control unit 70 per transporting vehicle and/or remotely such as in the control center 90. The first control unit 70 may use the input and output interface 600 to communicate with and/or control, sensors, actuators, subsystems, and interfaces in the at least one transporting vehicle 10, 11, 12, the at least one trailer 20, 21, 22, 23, 24, and/or the at least one loading equipment 30, 31, 32, e.g., by using any one or more out of: Controller Area Network (CAN), ethernet cables, Wi-Fi, UWB, Bluetooth, and/or other network interfaces.

The first control unit 70 may be configured to, e.g. by means of a **performing unit 601** comprised in the first control unit 70, perform a handover of control of the first trailer 20, which handover triggers an initiation of a first loading and/or unloading operation to be performed by the first loading equipment 30 on the first trailer .20.

The first control unit 70 may be configured to, e.g. by means of a **detecting unit 602** comprised in the first control unit 70, detect whether or not a candidate trailer 20, 21, 22, 23, 24 is available to be transported by the first transporting vehicle 10.

The first control unit 70 may be configured to, e.g. by means of an **attaching unit 603** comprised in the first control unit 70, when detecting that the candidate trailer 20, 21, 22, is available to be transported by the first transporting vehicle 10, attach the candidate trailer 20, 21, 22, 23, 24 to the first transporting vehicle 10.

The embodiments herein may be implemented through a processor or one or more processors, such as the processor 660 of a processing circuitry in the first control unit 70 depicted in Fig. 6a, together with computer program code for performing the functions and actions of the embodiments herein. The program code mentioned above may also be provided as a computer program medium, for instance in the form of a data computer readable medium carrying computer program code for performing the embodiments herein when being loaded into the first control unit 70. One such computer readable medium may be in the form of a memory stick. The computer program code may furthermore be provided as pure program code on a server and downloaded to the first control unit 70.

The first control unit 70 may further comprise a memory 670 comprising one or more memory units. The memory 670 comprises instructions executable by the processor in first control unit 70. The memory 670 is arranged to be used to store e.g. information, indications, data, configurations, sensor data, measurements, estimations, positioning information, and applications to perform the methods herein when being executed in the first control unit 70.

In some embodiments, a computer program 680 comprises instructions, which when executed by a computer, e.g. the at least one processor 660, cause the at least one processor of the first control unit 70 to perform the actions 301-303 above.

In some embodiments, a computer-readable storage medium 690 comprises the respective computer program 680. The computer-readable storage medium 690 may comprise program code for performing the steps of any one of actions 301-303 above when said program product is run on a computer, e.g. the at least one processor 660.

Those skilled in the art will appreciate that the units in the first control unit 70 described above may refer to a combination of analogue and digital circuits, and/or one or more processors configured with software and/or firmware, e.g. stored in the first control unit 70, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

The second control unit 80 may be configured to handle the at least one trailer 20, 21, 22, 23, 24 in the work site 100. The at least one trailer 20, 21, 22, 23, 24 is at least partly autonomous and/or remotely controllable.

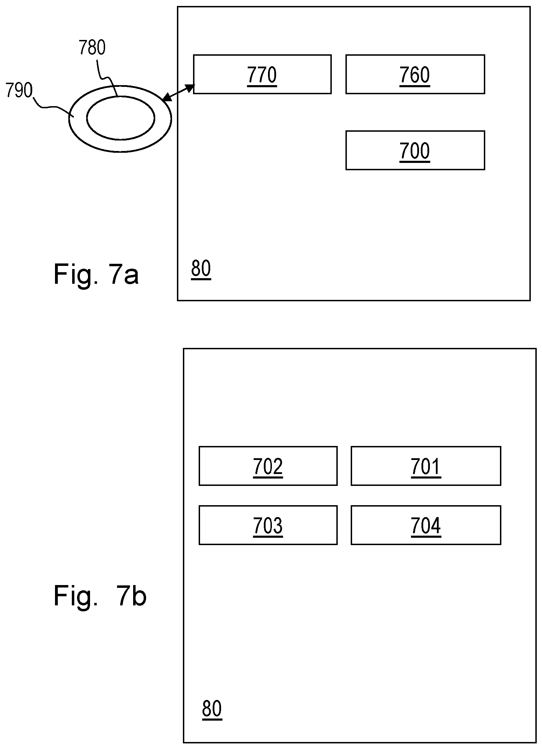

The second control unit 80 may further be configured to perform any one or more of the above actions 401-406 and/or any other suitable example or embodiment herein. The second control unit 80 may for example comprise an arrangement depicted in **Figs. 7a** and **7b****.**

The second control unit 80 may comprise an input and output interface 700 configured to communicate with any necessary components and/or entities of embodiments herein, e.g., the exemplified wireless devices in Fig. 2. The input and output interface 700 may comprise a wireless and/or wired receiver (not shown) and a wireless and/or wired transmitter (not shown). The second control unit 80 may be arranged in any suitable location such as e.g., comprised in the at least one loading equipment 30, 31, 32, e.g., one second control unit 80 per loading equipment and/or remotely, such as in the control center 90. The second control unit 80 may use the input and output interface 700 to communicate with and/or control, sensors, actuators, subsystems, and interfaces in the at least one transporting vehicle 10, 11, 12, the at least one trailer 20, 21, 22, 23, 24, and/or the at least one loading equipment 30, 31, 32, e.g., by using any one or more out of: Controller Area Network (CAN), ethernet cables, Wi-Fi, UWB, Bluetooth, and/or other network interfaces.

The second control unit 80 may be configured to, e.g. by means of a **detecting unit 701** comprised in the second control unit 80, detect an initiation of a first loading and/or unloading operation on the first trailer 20 to be performed by the first loading equipment 30.

The second control unit 80 may be configured to, e.g. by means of a **triggering unit 702** comprised in the second control unit 80, trigger an operation to be performed by the first trailer 20 for assisting the first loading equipment 30 in performing the first loading and/or unloading operation.

The second control unit 80 may be configured to, e.g. by means of the **triggering unit 702** comprised in the second control unit 80, trigger the first loading equipment 30 to perform the first loading and/or unloading operation on the first trailer 20,

The second control unit 80 may be configured to, e.g. by means of a **determining unit 703** comprised in the second control unit 80, determine that the first loading and/or unloading operation is complete,

The second control unit 80 may be configured to, e.g. by means of an **assessing unit 704** comprised in the second control unit 80, assess whether or not a second loading and/or unloading operation can be performed on the first trailer 20, and wherein to trigger the handover of the control of the first trailer based on the assessment.

The second control unit 80 may be configured to, e.g. by means of the **triggering unit 702** comprised in the second control unit 80, in response to determining that the first loading and/or unloading operation is complete, trigger a handover of control of the first trailer 20.

The embodiments herein may be implemented through a processor or one or more processors, such as the processor 760 of a processing circuitry in the second control unit 80 depicted in Fig. 7a, together with computer program code for performing the functions and actions of the embodiments herein. The program code mentioned above may also be provided as a computer program medium, for instance in the form of a data computer readable medium carrying computer program code for performing the embodiments herein when being loaded into the second control unit 80. One such computer readable medium may be in the form of a memory stick. The computer program code may furthermore be provided as pure program code on a server and downloaded to the second control unit 80.

The second control unit 80 may further comprise a memory 770 comprising one or more memory units. The memory 770 comprises instructions executable by the processor in second control unit 80. The memory 770 is arranged to be used to store e.g. information, indications, data, configurations, sensor data, measurements, estimations, positioning information, and applications to perform the methods herein when being executed in the second control unit 80.

In some embodiments, a computer program 780 comprises instructions, which when executed by a computer, e.g. the at least one processor 760, cause the at least one processor of the second control unit 80 to perform the actions 401-406 above.

In some embodiments, a computer-readable storage medium 790 comprises the respective computer program 780. The computer-readable storage medium 790 may comprise program code for performing the steps of any one of actions 401-406 above when said program product is run on a computer, e.g. the at least one processor 760.

Those skilled in the art will appreciate that the units in the second control unit 80 described above may refer to a combination of analogue and digital circuits, and/or one or more processors configured with software and/or firmware, e.g. stored in the second control unit 80, that when executed by the respective one or more processors such as the processors described above. One or more of these processors, as well as the other digital hardware, may be included in a single Application-Specific Integrated Circuitry (ASIC), or several processors and various digital hardware may be distributed among several separate components, whether individually packaged or assembled into a system-on-a-chip (SoC).

## Claims

1. A method for handling at least one trailer (20, 21, 22, 23, 24) in a work site (100), the at least one trailer (20, 21, 22, 23, 24) being at least partly autonomous and/or remotely controllable, a first trailer (20) being attached to a first transporting vehicle (10),
**characterized in that** the method comprises
- performing (301) a handover of control of the first trailer (20), which handover triggers an initiation of a first loading and/or unloading operation to be performed by a first loading equipment (30) on the first trailer (20),
- detecting (302) whether or not a candidate trailer (20, 21, 22, 23, 24) is available to be transported by the first transporting vehicle (10), and
- when detecting that the candidate trailer (20, 21, 22, 23, 24) is available to be transported by the first transporting vehicle (10), attaching (303) the candidate trailer (20, 21, 22, 23, 24) to the first transporting vehicle (10).

2. The method according to claim 1, wherein performing (301) the handover of control of the first trailer (20) comprises decoupling the first trailer (20) from the first transporting vehicle (10), and any one out of:
- transferring remote control of the first trailer (20) to the first loading equipment (30), or
- transferring autonomous control to the first trailer (20).

3. The method according to any one out of the preceding claims, wherein performing (301) the handover of control of the first trailer (20) is performed in response to any one or both out of:
- receiving an indication indicating to handover the control of the first trailer (20), and
- determining that the first loading equipment (30) is available to perform the first loading and/or unloading operation on the first trailer (20):

4. The method according to any one out of the preceding claims, wherein attaching (303) the candidate trailer (20, 21, 22, 23, 24) to the first transporting vehicle (10) comprises any one or more out of:
- obtaining remote control of the candidate trailer (20, 21, 22, 23, 24),
- coupling the candidate trailer (20, 21, 22, 23, 24) and the first transporting vehicle (10) using a fifth wheel coupling,
- performing a handover of control of the candidate trailer (20, 21, 22, 23, 24) to the first transporting vehicle (10) from any one out of: the first loading equipment (30), a second loading equipment (31), and the candidate trailer (20, 21, 22, 23, 24), and
- triggering an operation to be performed by the candidate trailer (20, 21, 22, 23, 24) and/or the first transporting vehicle (10) for assisting in attaching the candidate trailer (20, 21, 22, 23, 24) to the first transporting vehicle (10).

5. The method according to any one out of the preceding claims, wherein detecting (302) whether or not the candidate trailer (20, 21, 22, 23, 24) is available to be transported by the first transporting vehicle (10), comprises receiving an indication, the indication indicating any one or more out of:
the candidate trailer (20, 21, 22, 23, 24) is available to be transported,
the candidate trailer (20, 21, 22, 23, 24) is empty and/or idle, and
the candidate trailer (20, 21, 22, 23, 24) is loaded, and
the candidate trailer (20, 21, 22, 23, 24) is ready for at least one loading and/or unloading operation.

6. The method according to any one out of the preceding claims, further comprising:
- detecting (401) the initiation of the first loading and/or unloading operation on the first trailer (20) to be performed by the first loading equipment (30),
- triggering (403) the first loading equipment (30) to perform the first loading and/or unloading operation on the first trailer (20),
- in response to determining (404) that the first loading and/or unloading operation is complete, triggering (406) a handover of control of the first trailer (20).

7. The method according to claim 6, wherein triggering (406) the handover of the control of the first trailer (20) comprises triggering any one out of:
- a transfer of remote control of the first trailer (20) to a candidate transporting vehicle (10, 11, 12), or to a candidate loading equipment (31, 32), or
- a transfer of autonomous control to the first trailer (20).

8. The method according to any one of claims 6-7, further comprising triggering (402) an operation to be performed by the first trailer (20) for assisting the first loading equipment (30) in performing the first loading and/or unloading operation.

9. The method according to any one of claims 6-8, further comprising assessing (405) whether or not a second loading and/or unloading operation can be performed on the first trailer (20), and wherein triggering (406) the handover of the control of the first trailer is based on the assessment.

10. A first control unit configured to perform the method according to claims 1-5.

11. A second control unit configured to perform the method according to claims 6-9.

12. A transporting vehicle comprising the first control unit according to claim 10.

13. A loading equipment comprising the second control unit according to claim 11.

14. A computer program (680, 780) comprising program code means for performing the steps of any of claims 1-5 and/or 6-9 when said program is run on a computer.

15. A computer program medium (690, 790) carrying a computer program comprising program code means for performing the steps of any one of claims 1-5 and/or 6-9 when said program is run on a computer.

## Patentansprüche

1. Verfahren zum Handhaben von mindestens einem Anhänger (20, 21, 22, 23, 24) auf einer Baustelle (100), wobei der mindestens eine Anhänger (20, 21, 22, 23, 24) zumindest teilweise autonom und/oder fernsteuerbar ist, wobei ein erster Anhänger (20) an ein erstes Transportfahrzeug (10) angehängt wird, **dadurch gekennzeichnet, dass** das Verfahren umfasst
- Durchführen (301) einer Übergabe der Steuerung des ersten Anhängers (20), wobei die Übergabe die Einleitung eines ersten Be- und/oder Entladevorgangs auslöst, der von einer ersten Ladeausrüstung (30) am ersten Anhänger (20) durchgeführt werden soll,
- Erkennen (302), ob ein geeigneter Anhänger (20, 21, 22, 23, 24) für den Transport durch das erste Transportfahrzeug (10) verfügbar ist oder nicht, und
- wenn erkannt wird, dass der geeignete Anhänger (20, 21, 22, 23, 24) für den Transport durch das erste Transportfahrzeug (10) verfügbar ist, Anhängen (303) des geeigneten Anhängers (20, 21, 22, 23, 24) an das erste Transportfahrzeug (10).

2. Verfahren nach Anspruch 1, wobei das Durchführen (301) der Übergabe der Steuerung des ersten Anhänger (20) das Abkoppeln des ersten Anhängers (20) vom ersten Transportfahrzeug (10) und eines der Folgenden umfasst:
- Übertragen der Fernsteuerung des ersten Anhängers (20) auf die erste Ladeausrüstung (30), oder
- Übertragen der autonomen Steuerung auf den ersten Anhänger (20).

3. Verfahren nach einem der vorstehenden Ansprüche, wobei die Durchführung (301) der Übergabe der Steuerung des ersten Anhängers (20) als Reaktion auf eines oder beide der folgenden Ereignisse erfolgt:
- Empfangen eines Hinweises, der die Übergabe der Steuerung des ersten Anhängers (20) angibt, und
- Bestimmen, dass die erste Ladeausrüstung (30) zur Durchführung des ersten Lade- und/oder Entladevorgangs am ersten Anhänger (20) verfügbar ist.

4. Verfahren nach einem der vorstehenden Ansprüche, wobei das Anhängen (303) des geeigneten Anhängers (20, 21, 22, 23, 24) an das erste Transportfahrzeug (10) einen oder mehrere der folgenden Schritte umfasst:
- Erhalten der Fernsteuerung des geeigneten Anhängers (20, 21, 22, 23, 24),
- Koppeln des geeigneten Anhängers (20, 21, 22, 23, 24) und des ersten Transportfahrzeugs (10) mittels einer Sattelkupplung,
- Durchführen einer Übergabe der Steuerung des geeigneten Anhängers (20, 21, 22, 23, 24) an das erste Transportfahrzeug (10) von einem der Folgenden: der ersten Ladeausrüstung (30), einer zweiten Ladeausrüstung (31) und des geeigneten Anhängers (20, 21, 22, 23, 24), und
- Auslösen einer vom geeigneten Anhänger (20, 21, 22, 23, 24) und/oder dem ersten Transportfahrzeug (10) auszuführenden Operation zum Unterstützen des Anhängens des geeigneten Anhängers (20, 21, 22, 23, 24) an das erste Transportfahrzeug (10).

5. Verfahren nach einem der vorstehenden Ansprüche, wobei das Erkennen (302), ob der geeignete Anhänger (20, 21, 22, 23, 24) für den Transport durch das erste Transportfahrzeug (10) verfügbar ist oder nicht, das Empfangen eines Hinweises umfasst, wobei der Hinweis eines oder mehrere der folgenden Elemente angibt:
der geeignete Anhänger (20, 21, 22, 23, 24) ist zum Transport verfügbar,
der geeignete Anhänger (20, 21, 22, 23, 24) ist leer und/oder ungenutzt, und
der geeignete Anhänger (20, 21, 22, 23, 24) ist beladen, und
der geeignete Anhänger (20, 21, 22, 23, 24) ist für mindestens einen Be- und/oder Entladevorgang bereit.

6. Verfahren nach einem der vorstehenden Ansprüche, ferner umfassend:
- Erfassen (401) der Einleitung des ersten Be- und/oder Entladevorgangs am ersten Anhänger (20), der durch die erste Ladeausrüstung (30) durchgeführt werden soll,
- Auslösen (403) der ersten Ladeausrüstung (30) zum Durchführen des ersten Be- und/oder Entladevorgangs am ersten Anhänger (20),
- als Reaktion auf die Feststellung (404), dass der erste Be- und/oder Entladevorgang abgeschlossen ist, Auslösen (406) einer Übergabe der Steuerung des ersten Anhängers (20).

7. Verfahren nach Anspruch 6, wobei das Auslösen (406) der Übergabe der Steuerung des ersten Anhängers (20) das Auslösen eines der folgenden Schritte umfasst:
- eine Übertragung der Fernsteuerung des ersten Anhängers (20) auf ein geeignetes Transportfahrzeug (10, 11, 12) oder auf eine geeignete Ladeausrüstung (31, 32), oder
- eine Übertragung der autonomen Steuerung auf den ersten Anhänger (20).

8. Verfahren nach einem der Ansprüche 6 bis 7, das ferner das Auslösen (402) eines vom ersten Anhänger (20) auszuführenden Vorgangs zum Unterstützen der ersten Ladeausrüstung (30) bei der Durchführung des ersten Lade- und/oder Entladevorgangs umfasst.

9. Verfahren nach einem der Ansprüche 6 bis 8, das ferner das Bewerten (405) umfasst, ob ein zweiter Be- und/oder Entladevorgang am ersten Anhänger (20) durchgeführt werden kann oder nicht, und wobei das Auslösen (406) der Übergabe der Steuerung des ersten Anhängers auf der Bewertung basiert.

10. Erste Steuereinheit, die zum Durchführen des Verfahrens nach Anspruch 1 bis 5 konfiguriert ist.

11. Zweite Steuereinheit, die zum Durchführen des Verfahrens nach Anspruch 6 bis 9 konfiguriert ist.

12. Transportfahrzeug, das die erste Steuereinheit nach Anspruch 10 umfasst.

13. Ladeausrüstung, die die zweite Steuereinheit nach Anspruch 11 umfasst.

14. Computerprogramm (680, 780), das Programmcodemittel zum Durchführen der Schritte nach einem der Ansprüche 1 bis 5 und/oder 6 bis 9 umfasst, wenn das Programm auf einem Computer ausgeführt wird.

15. Computerlesbares Medium (690, 790), das ein Computerprogramm trägt, das Programmcodemittel zum Durchführen der Schritte nach einem der Ansprüche 1 bis 5 und/oder 6 bis 9 umfasst, wenn das Programmprodukt auf einem Computer ausgeführt wird.

## Revendications

1. Procédé de gestion d'au moins une remorque (20, 21, 22, 23, 24) sur un chantier (100), l'au moins une remorque (20, 21, 22, 23, 24) étant au moins partiellement autonome et/ou pouvant être commandée à distance, une première remorque (20) étant attachée à un premier véhicule de transport (10), **caractérisé en ce que** le procédé comprend
- l'exécution (301) d'un transfert de la commande de la première remorque (20), ce transfert déclenchant une initiation d'une première opération de chargement et/ou de déchargement à exécuter par un premier équipement de chargement (30) sur la première remorque (20),
- la détection (302) de la disponibilité ou non d'une remorque candidate (20, 21, 22, 23, 24) pour être transportée par le premier véhicule de transport (10), et
- lorsqu'il est détecté que la remorque candidate (20, 21, 22, 23, 24) est disponible pour être transportée par le premier véhicule de transport (10), l'attache (303) de la remorque candidate (20, 21, 22, 23, 24) au premier véhicule de transport (10).

2. Procédé selon la revendication 1, dans lequel l'exécution (301) du transfert de la commande de la première remorque (20) comprend le désaccouplement de la première remorque (20) du premier véhicule de transport (10), et l'un quelconque parmi :
- le transfert de la commande à distance de la première remorque (20) au premier équipement de chargement (30), ou
- le transfert de la commande autonome à la première remorque (20).

3. Procédé selon l'une quelconque des revendications précédentes, dans lequel l'exécution (301) du transfert de la commande de la première remorque (20) est exécutée en réponse à l'un quelconque ou aux deux parmi :
- la réception d'une indication de transfert de la commande de la première remorque (20), et
- la détermination de la disponibilité du premier équipement de chargement (30) pour exécuter la première opération de chargement et/ou de déchargement sur la première remorque (20) :

4. Procédé selon l'une quelconque des revendications précédentes, dans lequel l'attache (303) de la remorque candidate (20, 21, 22, 23, 24) au premier véhicule de transport (10) comprend l'un quelconque ou plusieurs parmi :
- l'obtention de la commande à distance de la remorque candidate (20, 21, 22, 23, 24),
- l'accouplement de la remorque candidate (20, 21, 22, 23, 24) et du premier véhicule de transport (10) au moyen d'une sellette d'attelage,
- l'exécution d'un transfert de la commande de la remorque candidate (20, 21, 22, 23, 24) au premier véhicule de transport (10) à partir de l'un quelconque parmi : le premier équipement de chargement (30), un second équipement de chargement (31) et la remorque candidate (20, 21, 22, 23, 24), et
- le déclenchement d'une opération à exécuter par la remorque candidate (20, 21, 22, 23, 24) et/ou le premier véhicule de transport (10) pour aider à attacher la remorque candidate (20, 21, 22, 23, 24) au premier véhicule de transport (10).

5. Procédé selon l'une quelconque des revendications précédentes, dans lequel la détection (302) de la disponibilité ou non de la remorque candidate (20, 21, 22, 23, 24) pour être transportée par le premier véhicule de transport (10), comprend la réception d'une indication, l'indication indiquant l'un quelconque ou plusieurs parmi :
la remorque candidate (20, 21, 22, 23, 24) est disponible pour être transportée,
la remorque candidate (20, 21, 22, 23, 24) est vide et/ou inoccupée, et
la remorque candidate (20, 21, 22, 23, 24) est chargée, et
la remorque candidate (20, 21, 22, 23, 24) est prête pour au moins une opération de chargement et/ou de déchargement.

6. Procédé selon l'une quelconque des revendications précédentes, comprenant en outre :
- la détection (401) de l'initiation de la première opération de chargement et/ou de déchargement de la première remorque (20) à exécuter par le premier équipement de chargement (30),
- le déclenchement (403) du premier équipement de chargement (30) pour exécuter la première opération de chargement et/ou de déchargement sur la première remorque (20),
- en réponse à la détermination (404) de l'achèvement de la première opération de chargement et/ou de déchargement, le déclenchement (406) d'un transfert de la commande de la première remorque (20).

7. Procédé selon la revendication 6, dans lequel le déclenchement (406) du transfert de la commande de la première remorque (20) comprend le déclenchement d'un quelconque parmi :
- un transfert de la commande à distance de la première remorque (20) à un véhicule de transport candidat (10, 11, 12), ou à un équipement de chargement candidat (31, 32), ou
- un transfert de la commande autonome à la première remorque (20).

8. Procédé selon l'une quelconque des revendications 6 à 7, comprenant en outre le déclenchement (402) d'une opération à exécuter par la première remorque (20) pour aider le premier équipement de chargement (30) à exécuter la première opération de chargement et/ou de déchargement.

9. Procédé selon l'une quelconque des revendications 6 à 8, comprenant en outre l'évaluation (405) de la possibilité d'exécuter une seconde opération de chargement et/ou de déchargement sur la première remorque (20), et dans lequel le déclenchement (406) du transfert de la commande de la première remorque est basé sur l'évaluation.

10. Première unité de commande configurée pour exécuter le procédé selon les revendications 1 à 5.

11. Seconde unité de commande configurée pour exécuter le procédé selon les revendications 6 à 9.

12. Véhicule de transport comprenant la première unité de commande selon la revendication 10.

13. Équipement de chargement comprenant la seconde unité de commande selon la revendication 11.

14. Programme informatique (680, 780) comprenant un moyen de code de programme pour l'exécution des étapes selon l'une quelconque des revendications 1 à 5 et/ou 6 à 9 lorsque ledit programme est exécuté sur un ordinateur.

15. Support de programme informatique (690, 790) contenant un programme d'ordinateur comprenant un moyen de code de programme pour l'exécution des étapes selon l'une quelconque des revendications 1 à 5 et/ou 6 à 9 lorsque ledit programme est exécuté sur un ordinateur.
